# EUROPEAN PATENT SPECIFICATION

(11) **EP 2 547 214 B1**
(45) Date of publication and mention of the grant of the patent: **10.08.2016**
(21) Application number: 11707870.9
(22) Date of filing: 11.03.2011
(51) Int. Cl.: A23G 1/42, A23C 9/123, A23L 33/135, A23L 7/126

(54) **DRIED FERMENTED DAIRY PRODUCT CONTAINING A HIGH DENSITY OF LIVING BIFIDOBACTERIA**
GETROCKNETES FERMENTIERTES MILCHPRODUKT MIT EINER HOHEN DICHTE AN LEBENDEN BIFIDOBAKTERIEN
PRODUIT LAITIER SEC CONTENANT DES BIFIDOBACTERIES EN GRANDE DENSITE

(30) Priority: 17.03.2010 WO PCT/IB2010/001192
(43) Date of publication of application: 23.01.2013
(73) Proprietor: Compagnie Gervais Danone, 75009 Paris (FR)
(72) Inventor: TEISSIER, Philippe, F-91120 Palaiseau (FR); REGULIER, Pascal, F-78280 Guyancourt (FR); STRAKA, Lukas, F-75017 Paris (FR); COENEN, Gerardus, NL-1103 AJ Amsterdam (NL); BUIJSSE, Carla, NL-6706 EE wageningen (NL); CREDOZ, Yves, F-92160 Antony (FR)
(74) Representative: Regimbeau
(86) International application number: PCT/EP2011/053752
(87) International publication number: WO 2011/113771

(56) References cited:
- WO-A1-2005/047489
- CN-C- 100 400 649
- JP-A- 2006 280 263
- US-A- 4 396 631
- US-A1- 2009 304 864
- WEN-CHIAN LIAN ET AL: "SURVIVAL OF BIFIDOBACTERIA AFTER SPRAY-DRYING", INTERNATIONAL JOURNAL OF FOOD MICROBIOLOGY, ELSEVIER SCIENCE PUBLISHERS, AMSTERDAM, NL, vol. 74, no. 1-2, 1 January 2002 (2002-01-01), pages 79-86, XP009085030, ISSN: 0168-1605, DOI: DOI:10.1016/S0168-1605(01)00733-4
- RODRIGUEZ-HUEZO ET AL: "Pre-selection of protective colloids for enhanced viability of Bifidobacterium bifidum following spray-drying and storage, and evaluation of aguamiel as thermoprotective prebiotic", FOOD RESEARCH INTERNATIONAL, ELSEVIER APPLIED SCIENCE, BARKING, GB, vol. 40, no. 10, 22 October 2007 (2007-10-22), pages 1299-1306, XP022308630, ISSN: 0963-9969, DOI: DOI:10.1016/J.FOODRES.2007.09.001

## Description

The present invention is in the field of food industry, more specifically of dairy industry.

The present invention concerns a dried fermented dairy product containing living bifidobacteria at a minimal concentration of 8.10⁷ cfu/g.

The invention also relates to a method for preparing same, and to applications of such a product in the food industry.

Probiotics and edible compositions comprising same have become increasingly popular for promoting or maintaining health in mammals, including humans. Typically, probiotics are live bacteria, or active fractions thereof, that provide a health benefit to a host upon consumption.

Food compositions comprising viable probiotics tend to have poor stability. Typically, ready-to-use probiotic-containing compositions are stored and distributed under refrigerated conditions, the compositions being thus fresh products. Alternatively, dried probiotic-containing food concentrates are provided, which either need to be extemporaneously dissolved into suspensions for an immediate consumption, or are consumed directly in powder or capsule form, in order to ensure that a sufficiently high percentage of the bacterial cells contained therein remain viable upon and after consumption.

However, dried bacterial concentrates provide only partial stability benefits. One problem posed by dried probiotic-containing compositions is due to the level of water available in the compositions. Actually, the moderate to relatively high levels of water in the dried compositions provided up to now enable the bacteria contained therein to continue metabolizing during storage. This undesirable metabolism results in the production of acidic metabolites and other side-products, as well as the breakdown and reduction in viability of the bacteria themselves. This confers off-tastes to the compositions and/or alters the organoleptic properties thereof in terms of colours, texture, and the like, the resulting compositions being finally inefficacious or unsuitable for consumption.

In an attempt to remedy to this problem, various solutions have been proposed so far.

Most of these solutions rely upon the use of dried culture medium containing viable bacteria (see, e.g., U.S. Patent application published under No. 2005/0100559 on May 12, 2005). Final food compositions are thus obtained by adding to a food preparation, either a bacteria-containing dried, and preferably pre-concentrated, culture medium, or a bacterial dried concentrate obtained upon separating the biomass from the culture medium and drying the recovered biomass. None of these final food compositions are fermented products such as fermented milks or yogurts. And, in many cases, the obtained compositions are not suitable for human consumption (especially when culture media are used).

Alternatively, it has been provided in International patent application No. WO 2007/077401 published on July 12, 2007, a fermented milk or yogurt powder containing very high levels of *Streptococcus thermophilus* and *Lactobacillus bulgaricus,* and exhibiting advantageous storage capacities. This powder, showing interesting stability, microbiological and organoleptic characteristics, is suitable for the use of S. *thermophilus* and *L. Bulgaricus*. However, the proposed culture and drying conditions are not adapted to the use of other type of lactic acid bacterial strains. In particular, the viability of bifidobacteria would be highly impaired under these conditions. JP2006280263 discloses a viable bifidobacterium microbial cell powder and its use.

Despite these advances, long-term storage of dry bacterial compositions, in particular dry compositions containing lactic acid bacteria, is yet far from optimised, especially when delicate bacteria such as bifidobacteria are used.

This problem is addressed by the present invention which provides a dried composition containing bifidobacteria having exceptional storage and viability capacities. Indeed, as shown below, the Inventors were the first in the art to find out the appropriate conditions for producing a dried fermented dairy product containing a high level of viable bifidobacteria and having a long shelf life given that bifidobacteria are known to be sensitive or delicate bacteria, the viability of which being strongly depending on the pH and the temperature.

It is herein disclosed a dried fermented dairy product containing living bifidobacteria at a minimal concentration of 8.10⁷ cfu/g.

A "dried fermented dairy product" according to the present invention is edible. It is suitable for mammalian consumption, preferably for human consumption. In particular, it is herein disclosed is an edible dried fermented milk for human consumption.

The term "fermented milk" has the usual meaning attributed thereto in the dairy industry, i.e., a product which is intended for mammal consumption, more particularly for human consumption, and which is derived from acidifying lactic fermentation of an initial dairy substrate or initial dairy mix. Said product may contain secondary ingredients such as fruits, vegetables, sugars, flavors, etc. The term "fermented milk" satisfies strict official guidelines. Reference may in this case be made to the Codex Alimentarius (prepared by the Codex Alimentarius Commission under the aegis of the FAO and ODM content, and published by the Information Division of the FAO, available on-line at http://codexalimentarius.net; see in particular volume 12 of the Codex Alimentarius "Standards for milk and dairy products" and the "Codex Stan A-11(a)-1975" standard now referred to as the Codex Stan 243-2003). In particular, reference may be made to French Law n°88-1203 dated 30 Dec. 1988 relating to fermented milk and yogurt or yoghourt, published in the Official Journal of the French Republic on 31 December 1988.

It is of note that (i) coagulation of "fermented milk" cannot be carried out by any means other than as a result of the activity of the lactic acid bacteria used; (ii) a "fermented milk" has not undergone any treatment that will remove a constituent element of the dairy mix employed, and in particular it has not had the coagulum drained off; (iii) a "fermented milk" may be supplemented with one or more flavouring extracts, one or more natural flavors and, to a limit of 30 per 100 by weight of finished product, one or more sugars and other foodstuffs endowing a specific taste, for example cereals; (iv) the incorporation of fat an/or protein substituents of non dairy origin is not allowed; (v) the quantity of free lactic acid contained in a fermented milk must not be less than 0.6 grams per 100 grams at the point of sale and the amount of protein material, expressed as the lactic portion, must not be less than that of normal milk.

A "dried" product according to the present invention is, for example, a powdered product or a granulated product.

The product herein disclosed contains living bifidobacteria at a minimal concentration of 8.10⁷ cfu/g for at least 3 months at room temperature.

Preferably, the water activity (a_{w}) of the product herein disclosed is less than 0.25. Alternatively or additionally, the pH of the

product according to the present invention is from 4.3 to 5.8, preferably from 4.6 to 5.3.

Preferably, the product herein disclosed is a "shelf-stable product", that is to say a product having structural and functional properties that do not significantly change or vary during a storage period of the product of at least 3 months at room temperature. "Room temperature" is preferably from 15 to 25°C, yet preferably from 18°C to 23°C. The period "3 months at room temperature" thus corresponds to the "minimal storage period" or "minimal shelf life" of the product. Minor changes or variations of the product may be tolerated during storage provided that at least the minimal concentration of living bifidobacteria is maintained during the minimal storage period (in other words, there is no significant loss of viability of the bifidobacteria upon storage). In some embodiments, one or more other features of the product, as disclosed herein, may advantageously be maintained: for example, the water activity a_{w} of less than 0.25; the pH from 4.3 to 5.8; and/or the dry matter content, the protein content, the content of other living lactic acid bacteria such as *L. Bulgaricus* and/or *S*. *thermophilus* and/or *Lactococcus lactis*, the organoleptic properties, etc. (see below for details).

The product herein disclosed_is not a fresh product that requires to be stored under refrigerating conditions (e.g., at 4°C).

Unless otherwise indicated, all bacterial concentrations or contents or amounts are expressed in cfu/g of product. Concentrations are thus expressed by reference to a product which is either the final product or another product such as a starting or an intermediate product. The person skilled in the art will clearly and unambiguously identify the product to which reference is made upon reading the present description.

The "minimal bacterial concentration" is the minimal bacterial content all along the minimal shelf life of the dried product. It may be considered as the "final bacterial concentration", corresponding to the bacterial concentration in the product at the end of the minimal storage period. Preferably, the minimal Bifidobacteria concentration in the product of the present invention is 10⁸ cfu/g, preferably 2.5.10⁸ cfu/g, more preferably 4.10⁸ cfu/g, and yet more preferably 5.10⁸ cfu/g.

The "maximal bacterial concentration" is the maximal bacterial content all along the minimal shelf life of the dried product. It may correspond to the "initial bacterial concentration", that is to say the bacterial concentration in the product just once manufactured, at the very beginning of the minimal storage period. Preferably, the maximal Bifidobacteria concentration in the product of the present invention is of 5.10⁹ cfu/g, preferably of 2.5.10⁹ cfu/g, and yet preferably of 10⁹ cfu/g. It may be important not to use Bifidobacteria concentrations higher than those disclosed herein in order to prevent the production of undesirable side-products such as acetic acid that would impart denaturising off-tastes to the resulting food product.

It is worth noting that the product of the invention may also be stored during shorter periods at higher temperature or longer periods than the minimal storage period defined above. For instance, after a storage period of 1 month at 35°C, the Bifidobacteria concentration is preferably at least 3.10⁷ cfu/g. Alternatively, after a storage period of 5 or even 6 months at 20°C, the Bifidobacteria concentration may be, for instance, of at least 3.10⁷ cfu/g, preferably at least 7.10⁷ cfu/g, yet preferably at least 1.10⁸ cfu/g. These concentrations thus correspond to the minimal Bifidobacteria concentrations under these specific storage conditions. Preferably, yet under these storage conditions, the Bifidobacteria concentration is no more than 5.10⁸ cfu/g, preferably no more than 10⁸ cfu/g, yet preferably no more than 8.10⁷ cfu/g, corresponding thus to the maximal Bifidobacteria concentrations under these conditions.

The product herein disclosed contains living bifidobacteria. Said bifidobacteria are preferably selected from *Bifidobacterium bifidum, Bifidobacterium infantis, Bifidobacterium animalis,* especially *Bifidobacterium animalis* subsp. *lactis, Bifidobacterium breve, Bifidobacterium longum,* and combinations thereof. Advantageously, said bifidobacteria comprise at least *Bifidobacterium animalis* subsp. *lactis,* preferably strain I-2494 deposited on June 20, 2000, at the Collection Nationale de Cultures des Microorganismes (CNCM), Institut Pasteur, 25 rue du Docteur Roux, 75724 PARIS cedex 15, France.

Interestingly, the product herein disclosed may further comprise other living lactic acid bacteria, especially lactic acid bacteria selected from *Lactobacillus sp., Streptococcus sp., Lactococcus sp.,* and combinations thereof. More particularly, said living lactic acid bacteria are selected from *Lactobacillus bulgaricus, Lactobacillus acidophilus, Lactobacillus paracasei, Lactobacillus pentosus, Lactobacillus helveticus, Lactobacillus reuteri, Lactobacillus plantarum, Lactobacillus bifidus, Streptococcus thermophilus, Streptococcus lactis, Streptococcus raffinolactis, Streptococcus cremoris, Lactococcus lactis,* and combinations thereof. Preferred living lactic acid bacteria to be used in the present invention are selected from *Lactobacillus bulgaricus, Streptococcus thermophilus, Lactococcus lactis,* and combinations thereof. In this case, the product according to the invention may contain:
- a concentration of living *L*. *bulgaricus* from 3.10⁶ cfu/g to 3.10⁹ cfu/g; and/or
- a concentration of living *S*. *thermophilus* from 10⁷ cfu/g to 3.10⁸ cfu/g; and/or
- a concentration of living *L*. *lactis* from 5.10⁶ cfu/g to 5.10⁸-cfu/g.

Advantageously, if the fermented product herein disclosed contains such a concentration of *L*. *bulgaricus* and *S. thermophilus*, it fulfills the specifications for a "yogurt" (see the Codex Alimentarius available on line at http://codexalimentarius.net, especially the CODEX STAN 243-2003 standard). Indeed, not all the fermented products containing these bacteria can be called yogurts, but only those wherein living *L. bulgaricus* and *S. thermophilus* are present at least at 1.10⁷ cfu/g.

Preferably, the water activity a_{w} of the product herein disclosed is less than 0.25, yet preferably less than 0.2. The term "water activity (a_{w})" refers to water in food which is not bound to food molecules and which thus can support the growth of microorganisms (bacteria, yeasts and moulds (fungi)), including pathogenic microorganisms. The a_{w} is preferably measured at ambient temperature such as 20-26°C, for example at 25°C

Preferably, the pH of the product herein disclosed is from 4.3 to 5.8, more preferably from 4.6 to 5.3. Bifidobacteria are
generally sensitive to acidity. Thus, the Inventors paid high attention to pH during conception of the present invention.

It was indeed a challenge for the Inventors to provide a dried fermented *Bifidobacterium*-containing food product wherein not only microbial poisoning but also loss of Bifidobacteria viability are prevented during storage at room temperature. To this end, after considerable search efforts, the Inventors achieved to specify appropriate acidity level (pH) and a_{w} for obtaining a satisfying product as disclosed in the context of the present invention.

Preferably, the product herein disclosed has a dry matter (DM) content from 94 to 98%, yet preferably from 95% to 97%. Preferably, the fermented dairy mix that will give the product herein disclosed upon drying has a DM content from 10 to 30%, yet preferably from 15% to 25%, and more preferably of 24%. Above 30%, lactic acid bacteria, including bifidobacteria, have high difficulties to grow. Also, such a DM content is required to be able to practice appropriate drying step(s).

Typically, the DM content corresponds to the mass of residual material measured after placing the product at 105°C. for 17 hours, with respect to the initial volume or to the initial mass of the product. The DM content can be measured directly, i.e., by placing the product the DM content of which is to be determined at 105° C. for 17 hours and measuring the mass of residual material which contained the initial volume of the treated product. Alternatively, a DM content may be measured indirectly, i.e., by measuring a parameter of the product from which the DM content may be deduced or estimated. As an example, the skilled person may measure the density of the product at a given temperature (for example at 45°C) and deduce there from the corresponding DM content, for example using a chart or a correspondence curve already drawn up by the skilled person, to deduce, from the density measured at the given temperature, the DM content corresponding thereto for the product under consideration. For instance, with respect to an initial dairy mix used as a starting material for preparing a fermented dairy product according to the present invention, indirect measurements such as densitometry are usually preferred as they can be carried out faster than the direct method. A conventional initial dairy mix has a DM content of the order of 10-20%, for example 11-13%. A fermented milk obtained by lactic fermentation of such a conventional initial dairy mix has a DM content which is not substantially different from that of the initial dairy mix, i.e., a conventional DM content of the order of 10-20%.

Preferably, the viscosity of the fermented dairy mix that will give the product herein disclosed upon drying is from 50mPa.s to 250 mPa.s, yet preferably from 50mPa.s to 400 mPa.s.

To obtain the required viscosity, the fermented dairy mix is preferably shorn using, for example, a dynamic smoothing equipment with a high peripheral velocity (minimum 30m/s), or using a homogeniser with a minimum pressure at 150 bars.

The measurement of viscosity is advantageously done at 10°C with a Rheomat and following parameters: 1-1/64s-1/10s.

Preferably, in the fermented dairy mix that will give the product herein disclosed upon drying, the protein content is from 3 to 7%, yet preferably from 3.5 to 6.2%.

Preferably, the product herein disclosed further comprises one or more food additives selected from:
- protecting agents for bifidobacteria; .
- sweeteners or sugars;
- growth-promoting nutrients for bifidobacteria;
- dispersing agents; and
- combinations thereof.

Preferably, the product herein disclosed comprises yeast extract, acacia gum, pectin, cellulose, and at least one sugar selected from saccharose, fructose, lactose, and glucose.

"Protecting agents for bifidobacteria" are food-acceptable agents capable of favoring the survival of bifidobacteria. Such agents preferably maintain a sufficiently high concentration of living bifidobacteria in the product, all along its manufacturing (especially the drying step(s)) and storing. Appropriate agents may be selected from acacia gum, cellulose, and threalose.

"Sweeteners or sugars" are food-acceptable carbohydrate sweeteners that may be natural or artificial, no or low calorie sweeteners. Preferred examples of appropriate sugars are sucrose, fructose, lactose, and glucose.

"Growth-promoting nutrients for bifidobacteria" are food-acceptable agents capable of improving the growth of bifidobacteria by, e.g., being metabolized by bifidobacteria. For instance, one can cite acacia gum and yeast extract.

"Dispersing agents or dispersants" are food-acceptable agents that are capable of enhancing recovering of a homogeneous liquid composition upon dissolution of the dried product into an appropriate liquid (corresponding to the reconstitution of a liquid composition). These agents will advantageously prevent milk proteins from precipitating upon reconstitution of an acidic liquid composition. Suitable dispersants can be selected from pectin, lecithin, cellulose, and carraghenans.

One or more other food additives may be added to enhance the properties of the product. Such other food additives may be selected from vitamins (e.g., vitamin A, B1, B2, B6, B12, C, D, E, K, folic acid, etc.), enzymes, plasticizers, colouring agents (pigments, dyes, etc.), flavouring agents (e.g., fruit flavours), anti-oxidants, buffering agents, lubricants (e.g., vegetable oils), stabilizers, and combinations thereof. If need be, the skilled artisan will be able to choose appropriate food additives among all the well-known food additives and excipients available on the market.

Preferably, the dairy product contains no starch, starch hydrolysate, or gelatinized material.

A method or process for preparing a dried fermented dairy product as described herein is the object of the present invention.

More particularly, the present invention relates to a method for preparing a dried fermented dairy product having a high density of living bifidobacteria, comprising:
a) providing an initial dairy mix characterised in that said initial dairy mix comprises one or more ingredients selected from:
   - milk;
   - cream;
   - skimmed milk powder; and
   - combinations thereof
b) optionally, adding to said initial dairy mix one or more additives selected from:
   - protecting agents for bifidobacteria;
   - sweeteners or sugars;
   - growth-promoting nutrients for bifidobacteria;
   - dispersing agents; and
   - combinations thereof;
c) inoculating said initial dairy mix or the mix obtained in step b) with living bifidobacteria at a maximal concentration of 10⁹ cfu/g;
d) fermenting the inoculated mix obtained in step c) at a temperature from 35°C to 39°C, in particular from 36°C to 37°C, during a period of time from 4 to 6 hours, and at a pH from 4.3 to 5.8;
e) primary drying the fermented mix obtained in step d) in a spray-drying chamber having an air inlet temperature from 120 to 145°C and an air outlet temperature from 50 to 70°C, for a period of time of 30 to 50 sec, at a feed temperature less than 40 °C;
f) optionally, secondary drying the resulting product, preferably on a fluidized bed;
g) recovering said product;
h) optionally, packaging the product obtained in step g); and
i) optionally, shelf-storing the product obtained in step g) or h), preferably for up to 3 months at room temperature.
characterised in that step e) and optionally step f) is carried out until a powder of fermented dairy product which has an a_{w} of less than 0.25 is obtained

Preferably, the product is stored 3 months at room temperature under low oxygen conditions (e.g., nitrogen).

Preferably, the product as described above is obtained from an initial dairy mix using the method of the invention. Thus, all the definitions and preferred features described above with respect to the dried fermented dairy product are applicable to the present method.

In particular, bifidobacteria are selected from *Bifidobacterium bifidum, Bifidobacterium infantis, Bifidobacterium animalis,* especially *Bifidobacterium animalis* subsp. *lactis, Bifidobacterium breve, Bifidobacterium longum,* and combinations thereof. Advantageously, said bifidobacteria comprise at least *Bifidobacterium animalis* subsp. *lactis*, preferably strain I-2494 deposited on June 20, 2000 at the CNCM.

The term "initial dairy mix" means a white mass as conventionally used in the dairy industry. It is usually designated as a "milk" which is a composition consisting essentially of milk and/or milk components. Milk is typically from animal origin and it may be whole milk, skimmed milk, semi-skimmed milk, milk concentrate, fresh milk, milk powder, reconstituted milk, milk enriched with milk components and/or food additives, etc. Lactic fermentation of said "initial dairy mix" by bifidobacteria results in a product which is preferably intended for human consumption, and more particularly which can be designated as a fermented milk.

Importantly, the "initial dairy mix" according to the present invention is not a bacterial culture medium which can be defined as a medium favouring and/or stimulating the growth of lactic acid bacteria. Indeed, a culture medium will enable to obtain a bacterial inoculum that may lead, upon appropriate separation, to a concentrated bacterial biomass, said inoculum or said concentrated biomass being useful for addition to a food product such as a yet fermented food product (having thus been fermented by other lactic acid bacteria than those contained in the inoculum or the concentrated biomass). On the contrary, the initial dairy mix used in the present invention is a starting material that will be transformed upon lactic fermentation in order to obtain a product suitable for mammalian (preferably human) consumption (if necessary, after reconstitution in a liquid, especially if the product is dried). Actually, the initial dairy mix will undergo a fermentation step by the lactic acid bacteria that are added thereto at the beginning of the manufacturing process. No other bacteria will then be added during the process. This means that all the materials present during the fermentation step will be contained in the final product.

Preferably, the initial dairy mix comprises one or more ingredients selected from:
- milk;
- cream;
- skimmed milk powder; and
- combinations thereof.

Many compounds which may be added to a culture medium to stimulate and/or encourage the growth of lactic acid bacteria cannot be added to an "initial dairy mix" in order to obtain a fermented dairy product according to the invention. This is in particular the case with many surfactants and/or emulsifying agents and/or solubilising agents and/or detergents, such a polyoxyethylene-sorbitan-20-monooleate (also known as polysorbate 80 or Tween 80).

Preferably, the mix obtained in step b) has the following formula (Table 1):

**Table 1**

| Ingredients | % wt |
|---|---|
| Milk | 76.19 |
| Cream | 7.03 |
| Skimmed milk powder | 10.26 |
| Sugar | 4.00 |
| Acacia gum | 2.00 |
| Yeast extract | 0.02 |
| Pectin and cellulose | 0.50 |

Preferably, in step c), the initial dairy mix or the mix obtained in step b) is inoculated with living bifidobacteria at a maximal concentration of 5.10⁸ cfu/g, preferably 2.5.10⁸ cfu/g.

Preferably, other living lactic acid bacteria are also added in step c), said lactic acid bacteria being advantageously selected from *Lactobacillus sp*., *Streptococcus sp*., *Lactococcus sp*., and combinations thereof.

In the method of the invention, massive inoculation of the dairy mix is carried out. This massive inoculation has the effect of resulting in a very limited growth of biomass. The inventors have demonstrated that, while the bacterial cell growth is considerably reduced, the fermenting activity is unexpectedly entirely equivalent or even better than that which may be observed during conventional milk fermentation. The invention thus proposes and allows cell growth to be decoupled from fermenting activity.

As mentioned above, no further living bacteria, especially lactic acid bacteria, are added after step d).

Lactic fermentation (step d)) is carried out using techniques which are known to the skilled person, so as to obtain a fermented dairy product which can be a fermented milk.

When reference is made to a "lactic fermentation", this means an acidifying lactic fermentation which results in milk coagulation and acidification following the production of lactic acid which may be accompanied by the production of other acids, carbon dioxide and various substances such as exopolysaccharides (EPS) or aromatic substances, for example diacetyl and acetaldehyde.

Here, during fermentation (step d)), concomitant acidification of the inoculated mix and bacterial adaptation to physico-chemical stresses (especially, acidification of the medium and subsequent drying conditions) are performed. This will advantageously improve shelf life stability of the resulting product. The fermentation conditions have to be controlled in order to: (i) optimise concomitant medium acidification and bacterial adaptation; (ii) avoid substantial loss of Bifidobacteria viability (while not favouring and/or stimulating bacterial growth); and (iii) prevent the bacteria from producing undesirable side-products such as acetic acid. The inoculated mix is thus maintained under conditions, in particular temperature conditions, which are favourable to the fermenting activity of bifidobacteria until a fermented dairy product (preferably a fermented milk) is obtained.

Accordingly, for the fermentation step d):
- a preferred temperature is 36.5°C; and/or
- a preferred time is 5 hours; and/or
- a preferred pH is 4.8.

In the method of the present invention, mild but very extensive powderizing is carried out and is combined with bulk inoculation of the initial dairy mix to obtain the expected living bifidobacterial concentrations. This is achieved without it being necessary to add lactic acid bacteria which would not participate in lactic fermentation and/or which would be added post-inoculation, and without it being necessary to concentrate the fermented mass.

The method according to the present invention does not comprise any step consisting of collecting or concentrating or separating the bacterial biomass. In the method of the invention, the bacterial biomass is not separated and resuspended.

Powderizing (step e) and optionally step f)) is carried out until a powder of fermented dairy product which has an a_{w} of less than 0.25 is obtained, while ensuring that the powderizing conditions, in particular the temperature conditions applied, are sufficiently favourable to the survival of bifidobacteria.

Regarding step e), preferred conditions of the primary drying of the fermented mix obtained in step d) in the spray-drying chamber are as follows:
- an air inlet temperature from 120 to 140°C, preferably from 120 to 138°C, yet preferably from 120 to 135°C; and/or
- an air outlet temperature from 55 to 65°C, preferably from 59 to 63°C; and/or
- the primary drying is performed for a period of time of 38 to 45s, preferably of 41s; and/or
- the feed temperature is between 3 and 40°C depending on the texture of the product, preferably less than 10°C, more preferably from 6 to 9°C, and yet more preferably of 8°C; and/or
- the temperature of the product in the spray-drying chamber is from 30 to 45°C, preferably from 35 to 43°C, yet preferably from 38 to 42°C, and more preferably of 41.5°C.

The Bifidobacteria viability is known to start decreasing at a temperature of 43°C. This is the reason why the temperature will be carefully controlled during drying of the product.

Water activity may still be too high after step e). If the desired a_{w} value has not yet been reached after step e), a further drying step f) is recommended in order to lower said a_{w} so as to obtain the desired a_{w} value and to extend the shelf life of the product at room temperature. The drying step can be done by a fluidized bed or other techniques such as freeze drying, putting under low moisture atmosphere flow, mixing with chemical edible water binders, diluting in dry matrix, and the like. If a fluidized bed is used in step f) to secondarily dry the product obtained in step e), it is preferably such as Gea Niro, Anhydro or Glatt type, and it is used after the spray-drying chamber used in step e). It may be located at the bottom of the spray-drying chamber and optionally followed by a cooling of the resulting powder. The following Table 2 gives illustrative a_{w} values for a product according to the present invention:

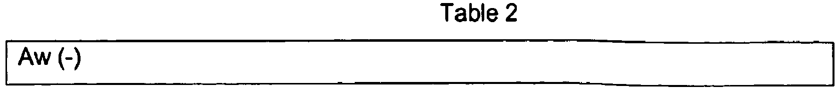

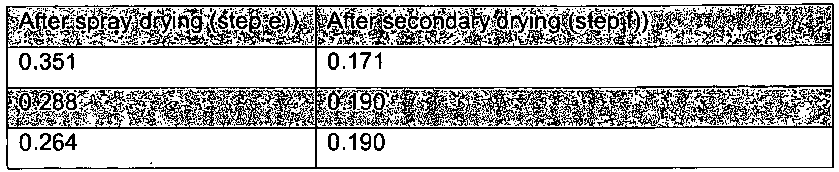

Appropriate fluidized bed conditions are advantageously set up depending on the water activity of the product at the outlet of the spray-drying chamber. For instance, for a water activity from 0.27 to 0.20, appropriate conditions may be:
- a temperature from 30 to 45°C, preferably from 32 to 40°C, yet preferably from 32 to 35°C; and/or
- a drying time from 2 min to 120 min, preferably from 10 min to 60 min, yet preferably from 15 min to 30 min.

Preferably, the concentration of bifidobacteria in the product obtained in step i) is the minimal Bifidobacteria concentration defined above. It is at least of 8.10⁷ cfu/g, preferably of 10⁸ cfu/g, more preferably of 2.5.10⁸ cfu/g, yet more preferably of 4.10⁸ cfu/g, and even more preferably of 5.10⁸ cfu/g.

When other lactic acid bacteria than bifidobacteria are added in step c), preferred embodiments are as follows:
- *L. bulgaricus* is added in step c) at a concentration from 10⁵ cfu/g to 2.10⁷ cfu/g; and/or the product obtained in step i) has a *L. bulgaricus* concentration from 3.10⁶ cfu/g to 3.10⁹ cfu/g; and/or
- *S. thermophilus* is added in step c) at a concentration from 2.10⁵ cfu/g to 5.10⁷ cfu/g; and/or the product obtained in step i) has a *S*. *thermophilus* concentration from 10⁷ cfu/g to 3.10⁸ cfu/g; and/or

- *L. lactis* is added in step c) at a concentration from 3.10⁶ cfu/g to 2.10⁸ cfu/g; and/or the product obtained in step i) has a *L. lactis* concentration from 5.10⁶ cfu/g to 5.10⁸-cfu/g.

Preferably, the product obtained in step g) has at least one of the following features:
- a water activity a_{w} of less than 0.25, preferably of less than 0.2; and/or
- a dry matter content from 94 to 98%, preferably from 95 to 97%; and/or
- a pH from 4.3 to 5.8, preferably from 4.6 to 5.3, yet preferably from 4.8 to 5.3.

Preferably, the method according to the present invention further comprises, before step h) or i), a step of mixing the product obtained in step g) with a flavoured edible powder, such as a fruit juice concentrated powder, a vegetable juice concentrated powder, a fruit compote or a fruit puree.

By "fruit juice", it is meant herein fruit juice, fruit juice concentrate or reconstituted fruit juice from fruit juice concentrate. For example, fruits may be selected from pear, strawberry, peach, pineapple, grape, apple, apricot, orange, banana, mango, cherry, plum, prune, blackberry, bilberry, raspberry, grapefruit, guava, kiwi fruit, passion fruit, papaya, lemon, quince, litchi, pomegranate, melon, etc.

By "vegetable juice", it is meant herein vegetable juice, vegetable juice concentrate or reconstituted vegetable juice from vegetable juice concentrate. For example, vegetable may be selected from soya, rice, oat, quinoa, chestnut, almond, nut, etc.

Another object herein disclosed is a dried fermented dairy product having a high density of living bifidobacteria that is obtainable by a method as described above.

Thus, the dairy product herein disclosed is a fermented product, preferably a fermented milk, with a high concentration of bifidobacteria in the viable or live form, without the need to add other lactic acid bacteria which would not participate in lactic fermentation and/or which would be added subsequently to inoculation, and without the need to concentrate the fermented mass.

Yet another disclosure is a flavoured powder having a high density of living bifidobacteria, which comprises mixing a dried fermented dairy product as described above and a flavoured edible powder, such as a fruit juice concentrated powder or a vegetable juice concentrated powder.

The particle size of the dried fermented dairy product or of the flavoured powder herein disclosed will advantageously adapted to the intended use thereof. For instance, one may choose a particle size from about 10 to about 500 µm for a single particle, which is optionally agglomerated or granulated to larger particles.

A further disclosure is a sealed container comprising a dried fermented dairy product or a flavoured powder as described above.

Preferably, such a container is selected from a jar, a sachet, a capsule, and a can. Examples of possible embodiments of a container according to the present invention are: low oxygen atmosphere, protection against light and/or moisture and/or gas transition with the environment.

Other objects herein disclosed are a dried fermented dairy product or a flavoured powder as described above, for use as:
- a probiotic; and/or
- an edible coating or filling.

A "coating" is an edible composition to be applied onto a food product. It may be applied, e.g., uniformly all around the food product, or on one or more sides or surfaces thereof, or as one or more discrete regions or plots.

A "filling" is an edible composition to be applied into a food product. It may be applied, e.g., in "sandwich" between two or more pieces of a food product, or as an internal core in a multi-layered food product.

Another object herein disclosed is a method for preparing an edible composition having a high density of living bifidobacteria, comprising:
a) adding an edible preparation to a dried fermented dairy product or a flavoured powder as described above; and
b) recovering said composition.

For example, an edible preparation for use in step a) may contain chocolate and/or other flavourings such as fruit flavourings.

The edible preparation used in step a) and/or the edible composition recovered in step b) may be a coating or a filling as disclosed above. Alternatively or additionally, it may be:
- semi-liquid such as a fruit puree, a jam or a yogurt; or
- liquid, such as a water, a milk, a fruit juice or a vegetable juice.

An_edible composition having a high density of living bifidobacteria that is obtainable by the foregoing method is herein disclosed.

Another disclosure is a method for preparing a foodstuff having a high density of living bifidobacteria, comprising:
a) coating or filling a foodstuff preparation with a dried fermented dairy product or a flavoured powder or an edible composition as described above; and
b) recovering said foodstuff.

Yet another disclosure is a foodstuff having a high density of living bifidobacteria obtainable by such a method.

Preferably, the foodstuff herein disclosed is selected from crackers, cereal bars, snacks, cakes, and biscuits.

Non-limiting embodiments and advantages of the present invention are shown in the following examples.

### EXAMPLES

### 1) Example 1: Preparation of a dried fermented dairy product according to the present invention

The product was prepared by spray-drying a fermented white mass (or fermented mix).

An example of initial dairy mix formula is described above (see Table 1).

**Table 3: white mass formula before inoculation**

| **Ingredient** | **Quantity (kg)** |
|---|---|
| SKIM MILK POWDER | 10.11 |
| SKIMMED MILK | 76.29 |
| CREAM | 7.18 |
| SUGAR | 4.00 |
| ACACIA GUM | 2.00 |
| YEAST EXTRACT | 0.02 |
| CELLULOSE GUM | 0.40 |
| **MIX** | **100.00** |

**Table 4: white mass formula after inoculation**

| **Composition** | **Quantity (kg)** |
|---|---|
| MIX | 99.40 |
| CULTURE | 0.60 |
| **WM for spray-drying** | **100.00** |

Other characteristics of the white mass (WM) before fermentation were:
- protein content: 6.2%;
- fat content: 3%.

The fermentation was stopped at pH 4.8 after 5h30 min, by cooling the resulting mix at a temperature below 20°C.

In all experiments described herein, the number of bifidobacteria and the water activity were determined on the resulting product using methods well-known to the person skilled in the art.

Analyses after spray drying + fluidized bed, the product having been stored < 7 days at 20°C:
a) Bifidobacterium count: 1.9E+09
b) Water activity: 0.17 ± 0.03.

### 2) Time stability of the bifidobacteria in a product prepared according to Example 1

Analyses were performed within a 6-month storage period at 20°C:
a)

**Table 5: Bifidobacterium count**

| **Time** | **Bifidobacterium content** |
|---|---|
| < 7 days | 1.9E+09 |
| 3 months | 7.4E+08 |
| 6 months | 1.6E+08 |

b)

**Table 6: Water activity**

| **Time** | **Water activity (a_{w})** |
|---|---|
| 3 months | 0.24 ± 0.03 |
| 6 months | 0.26 ± 0.03 |

### 3) Comparative example 2: Time stability of the bifidobacteria in a product not prepared according to the present invention

The Inventors have selected the parameters as disclosed herein (product composition and method for preparing same) for achieving Bifidobacterium stability in the dried fermented dairy product.

If a standard method using other, arbitrary parameters are used (for instance, conventional drying conditions such as: an air inlet temperature in the spray-drying chamber from about 189 to about 195°C and an air outlet temperature from about 89 to about 95°C), only low concentration of living bifidobacteria can be achieved in the resulting product.

Below is given an example of a Bifidobacterium count obtained after a conventional drying (see e.g., the conditions above which are standard for producing milk-based powder). The dried product has been stored less than 7 days at 20°C.
- Bifidobacterium count: < 10E+03.

## Claims

1. A method for preparing a dried fermented dairy product having a high density of living bifidobacteria, comprising:
a) providing an initial dairy mix, **characterised in that** said initial dairy mix comprises one or more ingredients selected from:
- milk;
- cream;
- skimmed milk powder; and
- combinations thereof
b) optionally, adding to said initial dairy mix one or more additives selected from:
- protecting agents for bifidobacteria;
- sweeteners or sugars;
- growth-promoting nutrients for bifidobacteria;
- dispersing agents; and
- combinations thereof;
c) inoculating said initial dairy mix or the mix obtained in step b) with living bifidobacteria at a maximal concentration of 10⁹ cfu/g;
d) fermenting the inoculated mix obtained in step c) at a temperature from 35 to 39, in particular from 36°C to 37°C, during a period of time from 4 to 6 hours, and at a pH from 4.3 to 5.8;
e) primary drying the fermented mix obtained in step d) in a spray-drying chamber having an air inlet temperature from 120 to 145°C and an air outlet temperature from 50 to 70°C, for a period of time of 30 to 50 sec, at a feed temperature less than 40°C;
f) optionally, secondary drying the resulting product, preferably on a fluidized bed;
g) recovering said product;
h) optionally, packaging the product obtained in step g); and
i) optionally, shelf-storing the product obtained in step g) or h), preferably for up to 3 months at room temperature;
**characterised in that** step e) and optionally step f) is carried out until a powder of fermented dairy product which has an a_{w} of less than 0.25 is obtained

2. The method according to claim 1, **characterised in that** said dried fermented dairy product contains living bifidobacteria at a minimal concentration of 8.10⁷ cfu/g.

3. The method according to claim 1 or 2, **characterised in that** said dried fermented dairy product contains living bifidobacteria at a minimal concentration of 8.10⁷ cfu/g for at least 3 months at room temperature.

4. The method according to anyone of claims 1 to 3, **characterised in that** said dried fermented dairy product has a maximal concentration of bifidobacteria of 5.10⁹ cfu/g, preferably 2.5.10⁹ cfu/g, and yet preferably 10⁹ cfu/g.

5. The method according to anyone of claims 1 to 4, **characterised in that** said bifidobacteria are selected from *Bifidobacterium bifidum, Bifidobacterium infantis, Bifidobacterium animalis,* especially *Bifidobacterium animalis* subsp. *lactis, Bifidobacterium breve, Bifidobacterium longum,* and combinations thereof.

6. The method according to anyone of claims 1 to 5, **characterised in that** other living lactic acid bacteria are added in step c), said lactic acid bacteria being preferably selected from *Lactobacillus sp., Streptococcus sp., Lactococcus sp.,* and combinations thereof.

7. The method according to claim 6, **characterised in that** said dried fermented dairy product has a concentration of *Lactobacillus bulgaricus* from 3.10⁶ cfu/g to 3.10⁹ cfu/g; and/or a concentration of *Streptococcus thermophilus* from 10⁷ cfu/g to 3.10⁸ cfu/g; and/or a concentration of *Lactococcus lactis* from 5.10⁶ cfu/g to 5.10⁸ cfu/g.

8. The method according to anyone of claims 1 to 7, **characterised in that** said dried fermented dairy product has a dry matter content from 94 to 98 %, preferably from 95 % to 97 %.

9. The method according to anyone of claims 1 to 8, **characterised in that** said initial dairy mix has a dry matter content from 10 to 30%,

## Patentansprüche

1. Verfahren zur Herstellung eines trockenen, fermentierten Molkereiprodukts mit einer hohen Dichte von lebenden Bifidobakterien, umfassend:
a) Bereitstellen eines anfänglichen Molkereigemisches, **dadurch gekennzeichnet, dass** das anfängliche Molkereigemisch einen oder mehrere Bestandteile umfasst, die ausgewählt sind aus:
- Milch;
- Creme;
- Magermilchpulver; und
- Kombinationen davon;
b) gegebenenfalls Zugeben zum anfänglichen Molkereigemisch eines oder mehrerer Zusatzstoffe, die ausgewählt sind aus:
- Schutzmittel für Bifidobakterien;
- Süßungsmittel oder Zucker;
- wachstumsfördernde Nährstoffe für Bifidobakterien;
- Dispergiermittel; und
- Kombinationen davon;
c) Beimpfen des anfänglichen Molkereigemisches oder des in Schritt b) erhaltenen Gemisches mit lebenden Bifidobakterien in einer maximalen Konzentration von 10⁹ cfu/g;
d) Fermentieren des in Schritt c) erhaltenen beimpften Gemisches bei einer Temperatur von 35 bis 39, insbesondere von 36 °C bis 37 °C während eines Zeitraums von 4 bis 6 Stunden und bei einem pH von 4,3 bis 5,8;
e) primäres Trocknen des in Schritt d) erhaltenen fermentierten Gemisches in einer Sprühtrockenkammer mit einer Lufteinlasstemperatur von 120 bis 145 °C und einer Luftauslasstemperatur von 50 bis 70 °C für einen Zeitraum von 30 bis 50 sec bei einer Zuführtemperatur von 40 °C;
f) gegebenenfalls sekundäres Trocknen des resultierenden Produkts, vorzugsweise auf einem Fließbett;
g) Rückgewinnen des Produkts;
h) gegebenenfalls Verpacken des in Schritt g) erhaltenen Produkts; und
i) gegebenenfalls Lagern des in Schritt g) oder h) erhaltenen Produkts vorzugsweise für bis zu 3 Monate bei Raumtemperatur im Regal;
**dadurch gekennzeichnet, dass** Schritt e) und gegebenenfalls Schritt f) ausgeführt werden, bis ein Pulver von fermentiertem Molkereiprodukt erhalten wird, dass eine a_{w} von weniger als 0,25 aufweist.

2. Verfahren nach Anspruch 1, **dadurch gekennzeichnet, dass** das getrocknete fermentierte Molkereiprodukt lebende Bifidobakterien in einer minimalen Konzentration von 8·10⁷ cfu/g enthält.

3. Verfahren nach Anspruch 1 oder 2, **dadurch gekennzeichnet, dass** das getrocknete fermentierte Molkereiprodukt lebende Bifidobakterien in einer minimalen Konzentration von 8·10⁷ cfu/g für mindestens 3 Monate bei Raumtemperatur enthält.

4. Verfahren nach einem der Ansprüche 1 bis 3, **dadurch gekennzeichnet, dass** das getrocknete fermentierte Molkereiprodukt eine maximale Konzentration von Bifidobakterien von 5·10⁹ cfu/g, vorzugsweise 2,5·10⁹ cfu/g und insbesondere von 10⁹ cfu/g aufweist.

5. Verfahren nach einem der Ansprüche 1 bis 4, **dadurch gekennzeichnet, dass** die Bifidobakterien aus *Bifidobacterium bifidum, Bifidobacterium infantis, Bifidobacterium animalis,* insbesondere *Bifidobacterium animalis subsp. lactis, Bifidobacterium breve, Bifidobacterium longum* und Kombinationen davon ausgewählt sind.

6. Verfahren nach einem der Ansprüche 1 bis 5, **dadurch gekennzeichnet, dass** andere lebende Milchsäurebakterien in Schritt c) zugegeben werden, wobei die Milchsäurebakterien vorzugsweise aus *Lactobacillus sp., Streptococcus sp., Lactococcus sp.* und Kombinationen davon ausgewählt sind.

7. Verfahren nach Anspruch 6, **dadurch gekennzeichnet, dass** das getrocknete fermentierte Molkereiprodukt eine Konzentration von *Lactobacillus bulgaricus* von 3·10⁶ cfu/g bis 3.10⁹ cfu/g; und/oder eine Konzentration von *Streptococcus thermophilus* von 10⁷ cfu/g bis 3·10⁸ cfu/g; und/oder eine Konzentration von *Lactococcus lactis* von 5.10⁶ cfu/g bis 5.10⁸ cfu/g aufweist.

8. Verfahren nach einem der Ansprüche 1 bis 7, **dadurch gekennzeichnet, dass** das getrocknete fermentierte Molkereiprodukt einen Trockensubstanzgehalt von 94 bis 98 %, vorzugsweise von 95 % bis 97 % aufweist.

9. Verfahren nach einem der Ansprüche 1 bis 8, **dadurch gekennzeichnet, dass** das anfängliche Molkereigemisch einen Trockensubstanzgehalt von 10 bis 30 % aufweist.

## Revendications

1. Méthode de préparation d'un produit laitier fermenté asséché ayant une densité élevée en bifidobactéries vivantes, comprenant :
a) la préparation d'un mélange laitier initial, **caractérisée en ce que** ledit mélange laitier initial comprend un ou plusieurs ingrédients choisis parmi :
- le lait ;
- la crème ;
- le lait en poudre écrémé ; et
- leurs combinaisons
b) éventuellement, l'ajout audit mélange laitier initial d'un ou de plusieurs additifs choisis parmi :
- les agents de protection pour bifidobactéries ;
- les édulcorants ou les sucres ;
- les nutriments favorisant la croissance des bifidobactéries ;
- les agents de dispersion ; et
- leurs combinaisons ;
c) l'inoculation dudit mélange laitier initial ou du mélange obtenu à l'étape b) avec des bifidobactéries vivantes à une concentration maximale de 10⁹ cfu/g ;
d) la fermentation du mélange inoculé obtenu à l'étape c) à une température de 35 à 39 °C, en particulier de 36 à 37 °C, pendant une période de temps de 4 à 6 heures, et à un pH de 4,3 à 5,8 ;
e) le séchage primaire du mélange fermenté obtenu à l'étape d) dans une chambre de séchage par atomisation ayant une température d'admission d'air de 120 à 145 °C et une température d'évacuation d'air de 50 à 70 °C, pendant une période de temps de 30 à 50 sec, et à une température de chargement inférieure à 40 °C ;
f) éventuellement, le séchage secondaire du produit obtenu, de préférence sur un lit fluidisé ;
g) la récupération dudit produit ;
h) éventuellement, l'emballage du produit obtenu à l'étape g) ; et
i) éventuellement, le stockage du produit obtenu à l'étape g) ou h), de préférence jusqu'à 3 mois à température ambiante ;
**caractérisée en ce que** l'étape e) et éventuellement l'étape f) sont mises en oeuvre jusqu'à obtention d'un produit laitier fermenté en poudre ayant une valeur a_{w} inférieure à 0,25.

2. Méthode selon la revendication 1, **caractérisée en ce que** ledit produit laitier fermenté asséché contient des bifidobactéries vivantes à une concentration minimale de 8.10⁷ cfu/g.

3. Méthode selon la revendication 1 ou 2, **caractérisée en ce que** ledit produit laitier fermenté asséché contient des bifidobactéries vivantes à une concentration minimale de 8.10⁷ cfu/g pendant au moins 3 mois à température ambiante.

4. Méthode selon l'une quelconque des revendications 1 à 3, **caractérisée en ce que** ledit produit laitier fermenté asséché a une concentration maximale de bifidobactéries de 5·10⁹ cfu/g, de préférence de 2,5·10⁹ cfu/g, et mieux encore de 10⁹ cfu/g.

5. Méthode selon l'une quelconque des revendications 1 à 4, **caractérisée en ce que** lesdites bifidobactéries sont choisies parmi *Bifidobacterium bifidum, Bifidobacterium infantis, Bifidobacterium animalis,* notamment *Bifidobacterium animalis* ss-sp. *lactis, Bifidobacterium breve, Bifidobacterium longum,* et leurs combinaisons.

6. Méthode selon l'une quelconque des revendications 1 à 5, **caractérisée en ce que** d'autres bactéries d'acide lactique vivantes sont ajoutées à l'étape c), lesdites bactéries d'acide lactique étant de préférence choisies parmi *Lactobacillus sp., Streptococcus sp., Lactococcus sp.,* et leurs combinaisons.

7. Méthode selon la revendication 6, **caractérisée en ce que** ledit produit laitier fermenté asséché a une concentration de *Lactobacillus bulgaricus* de 3·10⁶ à 3.10⁹ cfu/g ; et/ou une concentration de *Streptococcus thermophilus* de 10⁷ à 3.10⁸ cfu/g; et/ou une concentration de *Lactococcus lactis* de 5.10⁶ à 5·10⁸ cfu/g.

8. Méthode selon l'une quelconque des revendications 1 à 7, **caractérisée en ce que** ledit produit laitier fermenté asséché a une teneur en matières sèches de 94 à 98 %, de préférence de 95 à 97 %.

9. Méthode selon l'une quelconque des revendications 1 à 8, **caractérisée en ce que** ledit mélange laitier initial a une teneur en matières sèches de 10 à 30%.
